# EUROPEAN PATENT APPLICATION

(11) **EP 3 605 385 A1**
(43) Date of publication of application: **05.02.2020**
(21) Application number: 18465552.0
(22) Date of filing: 03.08.2018
(51) Int. Cl.: G06K 9/00, B62D 15/02

(54) **AUTOMATED PARKING SYSTEM**

(71) Applicant: Continental Automotive GmbH, 30165 Hannover (DE)
(72) Inventor: Rafaila, Razvan, 700729 Iasi (RO); Amariutei, Roxana Daniela, 700093 Iasi (RO)

(57) **Abstract**

The invention relates to a method for automatically parking a vehicle. The method comprises receiving environment data describing an environment of the vehicle and computing parameters of the trajectory for automatically parking the vehicle by means of a trajectory computation function having input parameters and weights. The weights of the trajectory competition function may be learned based on training data, the training data being based on environment data and vehicle dynamics data of a manual parking maneuver.

## Description

### Field of the invention

The invention generally relates to the automatic parking of a vehicle, wherein the mathematical function for computing the parking trajectory is learned from training data. In particular, the invention relates to a data processing system for an automatic parking system for a vehicle, an automatic parking system, a computer-implemented method for automatically parking a vehicle and a computer-implemented method for learning a trajectory computation function for an automatic parking system.

### Background of the invention

Modern vehicles frequently comprise automatic parking systems. Such automatic parking systems typically comprise one or more sensor systems to monitor the environment of the vehicle. For example, automatic parking systems may comprise radar, camera, ultrasound and/or lidar systems. The data provided by such systems may be processed to detect objects near the vehicle. Furthermore, features may be extracted from the data to generate data patterns as representations for the objects. The patterns may be classified to detect, for example, if the object is a pedestrian, another vehicle, a curb, an empty parking space, an obstacle, etc. Based on data describing positions, dimensions and classifications of the objects in the area surrounding the vehicle, the automatic parking system may then compute a trajectory for parking the vehicle automatically.

Previous automatic parking systems are designed for specific parking scenarios. For example, US 2010/10204866 A1 describes an algorithm for parking a vehicle in parallel on a straight road in a parking space between two objects. Hence, the trajectory for parking the vehicle is computed based on model assumptions, which may not be satisfied in practice. The automatic parking system may be configured to detect that model assumptions are not satisfied. In this case, the automatic parking system may request from the driver to manually park the vehicle.

US 9, 140, 553 B2 describes another automatic parking system, which comprises a learning mode and an operation mode. In the learning mode, the vehicle is parked manually by the driver and the automatic parking system records reference data describing the surrounding area of the vehicle, the parking trajectory executed manually by the driver and the final parking position. In the operation mode, the vehicle compares the current surrounding area with reference data recorded in learning phases. When a recorded surrounding area is recognized, the automatic parking system may compute a parking trajectory that reaches the recorded manually driven parking trajectory and extends until the recorded parking position. This approach to automatic parking is useful when the vehicle needs to be parked frequently at the same location, for example in a garage. However, the vehicle has to be parked manually whenever a parking space has not been learned before.

### Summary of the invention

Embodiments of the present invention may provide automatic parking systems, which can park vehicles in a wide range of parking scenarios. In particular, the present invention may provide automatic parking systems, which can park vehicles in parking scenarios, which have not been recorded before. Furthermore, the present invention may provide automatic parking systems, which are not restricted to specific model assumptions defined by a system architect.

Embodiments of the present invention are beneficial in particular for automatic valet parking systems, where the vehicle automatically searches for a parking space and automatically performs the parking maneuver in the absence of a driver. For such systems, it may be particularly cumbersome when the vehicle cannot be parked automatically, for example because the area surrounding the parking space has not yet been learned or because the parking scenario does not satisfy certain model assumptions.

The subject-matter of the independent claims provide automatic parking systems, which can park vehicles in many parking scenarios. Further exemplary embodiments are evident from the dependent claims and the following description.

According to a first aspect of the present invention, a data processing system for an automatic parking system for a vehicle is given. The data processing system is configured to receive environment data, the environment data describing an environment of the vehicle. Further, the data processing system is configured to compute parameters of a trajectory for automatically parking the vehicle by means of a trajectory computation function comprising input parameters and weights. The data processing system is also configured to receive values of the weights of the trajectory computation function and/or to learn the values of the weights based on training data. In addition, the data processing system is configured to set at least part of the input parameters of the trajectory computation function to values derived from the environment data.

The environment data may be based on signals received by radar, ultrasound, camera or lidar sensors. The environment data may be preprocessed. For example, signals received by the antennas of a radar system may be amplified, filtered, converted to baseband, sampled, quantized and/or digitized. The so-obtained data may be further processed to detect objects in the area surrounding the vehicle. In addition, features may be extracted from the processed sensory data and data patterns may be generated as representations for objects. The data patterns may be classified to detect, for example, if an object is an obstacle, pedestrian, another vehicle, free parking space, etc. The environment data may comprise a list of objects including information about positions, dimensions and/or classifications of objects.

The data processing system is further configured to compute parameters of a trajectory for automatically parking the vehicle by means of the trajectory computation function. Thereby, at least part of the input parameters of the trajectory computation function is set to values derived from the environment data. The trajectory for automatically parking the vehicle may be modeled as a piecewise differentiable continuous curve, and the data processing system may be configured to compute parameters of this curve by means of the trajectory computation function.

The trajectory computation function comprises weights and the data processing system for the automatic parking system may learn these weights based on training data. The training data may be recorded in training phases, when the vehicle is parked manually by a driver. The training data may comprise one or more training samples related to different manual parking maneuvers. One training sample may be associated with one manual driving maneuver. The training sample may comprise environment data such as a list of objects in the environment of the vehicle including information about positions, dimensions and/or classifications of objects. The training sample may also comprise desired output parameters of the trajectory computation function, which may be derived from recordings of the vehicle dynamics during the manual parking maneuver. Hence, the training sample may comprise a set of input parameter values and a set of desired output parameter values of the trajectory computation function derived from environment and vehicle dynamics data of a manual parking maneuver. The weights of the trajectory computation function may be adapted based on such a training sample. Such an adaptation of the weights of the trajectory computation function may be repeated many times, for example, each time the vehicle is parked manually.

It is also possible that the data processing system receives values of the weights of the trajectory computation function. For example, the data processing system may receive weight values from a server, which learns the weights of the trajectory computation function based on training samples received from one or more vehicles. In other words, one or more vehicles may send training samples to the server, for example, whenever a vehicle is parked manually, and the server may learn the weights of the trajectory computation function based on training data comprising training samples from the one or more vehicles.

After the weights of the trajectory computation function have been learned or received, the data processing system can compute suitable parking trajectories for many parking scenarios, not just parking scenarios satisfying predefined model assumptions.

According to an embodiment of the invention, the trajectory computation function is based on a neural network and/or the trajectory computation function is a differentiable function of the weights.

Neural networks can be used to learn certain input-output-relationships, which are difficult to comprehend or define on a symbolic level. Neural networks and corresponding learning algorithms provide a framework for learning from training data and for generating suitable outputs even if input parameter values do not match any of the training samples.

The trajectory computation function is preferably a differentiable function of the weights, since this eases the learning of weight values. In particular, the weights may be adjusted in each training step comprising one or more training samples, so that distances between the desired output parameters of the training samples and the output parameters of the trajectory computation function for the associated training input parameters are reduced. The differentiability of the trajectory computation function allows applying, for example, gradient or Newton descent methods for the learning of the weights of the trajectory computation function.

According to another embodiment of the invention, the parameters of the trajectory for automatically parking the vehicle comprise polynomial coefficients.

The trajectory for automatically parking the vehicle may be modeled as a polynomial curve or as a curve comprising a polynomial portion, and one or more output parameters of the trajectory computation function may specify this polynomial curve/portion.

In an embodiment, the parking trajectory may be modeled in a piecewise manner, and one or more of the pieces of the trajectory may be modeled as a polynomial curve. In this embodiment, output parameters of the trajectory computation function may be related to polynomial coefficients of one or more of the pieces of the parking trajectory.

According to other embodiments of the invention, the trajectory for automatically parking the vehicle may be modeled using for example trigonometric functions for one or more pieces of the trajectory. Hence, according to embodiments of the invention, the parameters of the trajectory for automatically parking the vehicle comprise coefficients of trigonometric functions.

According to another embodiment of the invention, the data processing system for the automatic parking system is further configured to compute a starting position of the parking trajectory by means of the trajectory computation function.

The output parameters of the trajectory computation function may specify, for example, a polynomial curve. To indicate, which part of this polynomial curve is to be followed for parking the vehicle, the trajectory computation function may comprise output parameters specifying the starting position of the parking trajectory.

The data processing system may be configured to learn the weight values of the trajectory computation function based on training data, wherein a training sample comprises input and desired output parameter values derived from environment and vehicle dynamics data describing the environment and vehicle dynamics of a manual parking maneuver, respectively. Thereby, the desired output parameters may comprise a desired starting position of the parking trajectory. This desired starting position, which forms part of a training sample, may not be the actual starting position of the manual parking maneuver. The data processing system may be configured to determine the desired starting position of a training sample as an intermediate point of the manual parking maneuver. The data processing system may be configured to determine the desired starting position of a training sample such that the trajectory computation function can provide an output trajectory, which is a close fit of the part of the manual parking maneuver from the desired starting position to the final parking position. Determining a desired starting position such that the part of the manual parking trajectory from the desired starting position to the final parking position can be fitted accurately using the parking trajectory model of the trajectory computation function may result in better training results of the trajectory computation function.

According to another embodiment of the invention, the data processing system for the automatic parking system is further configured to determine, based on the environment data and the computed trajectory for parking the vehicle, if the vehicle can be parked automatically or if the vehicle needs to be parked manually by a driver.

Hence, the data processing system may be configured to verify if the vehicle can be parked automatically after the parking trajectory has been computed. For example, the data processing system may verify that the computed starting position of the parking trajectory can be reached, that the computed parking trajectory leads to an empty parking space and/or that the computed parking trajectory can be followed without collisions with objects in the environment of the vehicle.

According to another embodiment of the invention, the data processing system for the automatic parking system is further configured to adjust the computed trajectory for parking the vehicle based on the environment data.

An adjustment of the computed parking trajectory may for example be required when the current position of the vehicle does not coincide with the computed starting position of the parking trajectory. The data processing system may also be configured to adjust the computed parking trajectory to avoid collisions with objects in the environment of the vehicle.

According to another embodiment of the invention, the data processing system for the automatic parking system is configured to receive vehicle dynamics data, the vehicle dynamics data describing the environment of the vehicle at the time when the vehicle is parked manually by the driver. In addition, the training data for learning the values of the weights of the trajectory computation function is based on the environment data and the vehicle dynamics data.

Hence, the vehicle dynamics data is derived from sensory data recorded during a manual parking maneuver. The vehicle dynamics data may comprise data describing positions, speeds, accelerations and/or yaw rates of the vehicle during the manual parking maneuver.

The training data for learning the weight values of the trajectory computation function is based on environment data describing the environment of the vehicle at a time briefly before the vehicle is parked manually by the driver, while the vehicle is parked manually by the driver or briefly after the vehicle is parked manually by the driver. The data processing system for the automatic parking system may also be configured to learn the trajectory computation function based on training data, the training data being based on environment data and/or vehicle dynamics data describing the environment of the vehicle or the vehicle dynamics at several time instants of a manual parking maneuver.

The training data for learning the weight values of the trajectory computation function is based on environment data and vehicle dynamics data. In particular, the training samples comprise input parameter values of the trajectory computation function and desired output parameter values, wherein training sample input parameter values are based on the environment data, and wherein training sample output parameter values are based on the vehicle dynamics data.

According to another aspect of the present invention, an automatic parking system for a vehicle is given. The automatic parking system comprises a sensor system for providing environment data. Furthermore, the automatic parking system comprises a data processing system according to the invention.

The sensor system and the data processing system may communicate, at least in part, via a bus system of the vehicle. In addition or alternatively, the sensor system and the data processing system may communicate, at least in part, via a dedicated wireline or wireless communication system, which may form part of the automatic parking system.

The data processing system for the automatic parking system may comprise several modules, some of which may not be part of the vehicle. In particular, the data processing system may comprise a parking execution module and a parking learning module. The parking execution module may be located in the vehicle, whereas the parking learning module may be realized as a remote server.

The parking execution module may be configured to receive environment data describing the environment of the vehicle, to compute parameters of a trajectory for automatically parking the vehicle by means of the trajectory computation function comprising input parameters and weights, to receive values of the weights of the trajectory computation function and to set at least part of the input parameters of the trajectory computation function to values derived from the environment data.

Furthermore, the parking execution module may be configured to determine, based on the environment data and the computed trajectory for parking the vehicle, if the vehicle can be parked automatically or if the vehicle needs to be parked manually by the driver.

In addition, the parking execution module may be configured to adjust the computed trajectory for parking the vehicle based on the environment data.

The parking learning module may be configured to receive environment data, the environment data describing the environment of the vehicle at a time when the vehicle is parked manually by the driver. Furthermore, the parking learning module may be configured to receive vehicle dynamics data, the vehicle dynamics data describing dynamics of the vehicle at the time when the vehicle is parked manually by the driver and to learn the values of the weights of the trajectory computation function based on training data, wherein the training data for learning the values of the weights of the trajectory computation function is based on the environment data and the vehicle dynamics data.

According to another aspect of the present invention, a computer-implemented method for automatically parking a vehicle is given, the method comprising the following steps: receiving environment data, the environment data describing an environment of the vehicle; computing parameters of a trajectory for automatically parking the vehicle by means of a trajectory computation function comprising input parameters and weights; receiving values of the weights of the trajectory computation function and/or learning the values of the weights based on training data; and setting at least part of the input parameters of the trajectory computation function to values derived from the environment data.

According to another embodiment of the invention, the computer-implemented method further comprises computing a starting position of the parking trajectory by means of the trajectory computation function.

According to another embodiment of the invention, the computer-implemented method further comprises determining, based on the environment data and the computed trajectory for parking the vehicle, if the vehicle can be parked automatically or if the vehicle needs to be parked manually by the driver.

According to another embodiment of the invention, the computer-implemented method further comprises receiving vehicle dynamics data, the vehicle dynamics data describing the dynamics of the vehicle at a time when the vehicle is parked manually by the driver. Then, the training data for learning the weights of the trajectory computation function is based on the environment data and the vehicle dynamics data.

According to another embodiment of the invention, the computer-implemented method further comprises adjusting the computed trajectory for parking the vehicle based on the environment data.

According to another aspect of the present invention, a computer-implemented method for learning weights of a trajectory computation function for an automatic parking system for a vehicle is given, wherein input parameters of the trajectory computation function are related, at least in part, to an environment of the vehicle, and wherein output parameters of the trajectory computation function specify, at least in part, a trajectory for automatically parking the vehicle. The computer-implemented method for learning the weights of the trajectory computation function comprises: receiving environment data, the environment data describing the environment of the vehicle at a time when the vehicle is parked manually by a driver; receiving vehicle dynamics data, the vehicle dynamics data describing dynamics of the vehicle at the time when the vehicle is parked manually by the driver; and learning the weights of the trajectory computation function based on the environment data and based on the vehicle dynamics data.

According to another embodiment of the computer-implemented method for learning the trajectory computation function, the output parameters of the trajectory computation function comprise parameters of a starting position of the parking trajectory, and the computer-implemented method comprises determining a desired starting position of the parking trajectory based on the vehicle dynamics data.

According to another aspect of the present invention, a computer-readable medium is given. The computer-readable medium comprises instructions which, when executed by a computer, cause the computer to carry out a computer-implemented method for automatically parking a vehicle or a computer-implemented method for learning a trajectory computation function according to the invention.

### Brief description of the drawings

- Fig. 1: shows a block diagram of an automatic parking system.
- Fig. 2: shows a method for automatically parking a vehicle

### Detailed description of the drawings

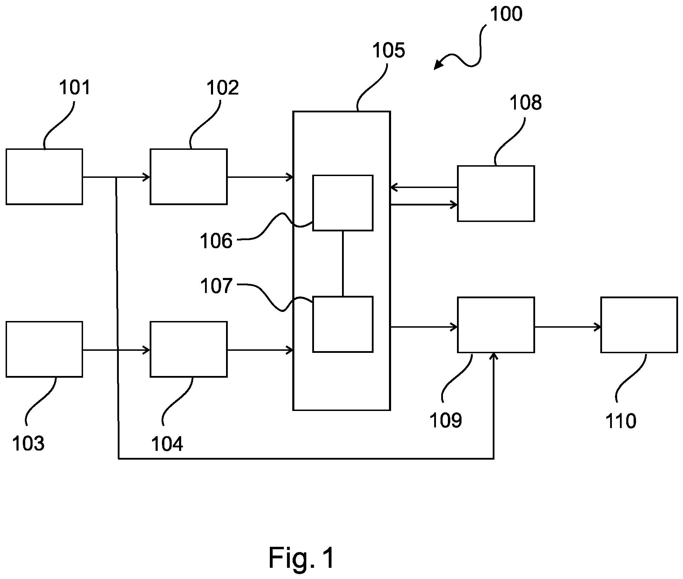

Figure 1 schematically shows an automatic parking system 100 for a vehicle. The automatic parking system 100 comprises a sensor system 101 for providing environment data. The sensor system 101 may be a radar, ultrasound, camera or lidar system. The automatic parking system 100 may comprise an environment data preprocessing module 102 for preprocessing data provided by the sensor system 101. The environment data preprocessing module 102 may perform operations such as object detection, feature extraction, data pattern classification etc. The environment data preprocessing module 102 may provide a list of objects in the environment of the vehicle comprising object positions, dimensions and/or classifications.

The automatic parking system 100 may further comprise a sensor system 103 for providing vehicle dynamics data. The data provided by the sensor system 103 may be preprocessed by a vehicle dynamics data preprocessing module 104. The vehicle dynamics data preprocessing module 104 may provide for example positions, speeds, accelerations and/or yaw rates of the vehicle.

The preprocessed environment and vehicle dynamics data may be provided to a data processing system 105 for the automatic parking system. The data processing system 105 may be configured to receive environment data from the environment data preprocessing module 102. Furthermore, the data processing system 105 may be configured to receive vehicle dynamics data from the vehicle dynamics data preprocessing module 104. The data processing system 105 may comprise a parking execution module 106. In addition, the data processing system 105 may comprise a parking learning module 107.

The parking execution module 106 of the data processing system 105 may be configured to compute parameters of a trajectory for automatically parking the vehicle by means of a trajectory computation function comprising input parameters and weights, whereby at least part of the input parameters of the trajectory computation function are set to values derived from the environment data.

The parking learning module 107 may be configured to learn the values of the weights of the trajectory computation function based on environment and vehicle dynamics data describing the environment and vehicle dynamics at one or more point in time of a manual parking maneuver.

Furthermore, the automatic parking system 100 may comprise a control system 108 for the activation of automatic parking. The control system 108 may provide an interface to the driver of the vehicle allowing the driver to activate the automatic parking of the vehicle. The control system 108 may be configured to indicate to the data processing system 105 that the vehicle shall be parked automatically. Upon receiving the indication from the control system 108, the data processing system 105 may compute a trajectory for automatically parking the vehicle based on environment data received from the environment data preprocessing module 102.

Furthermore, the parking execution module 106 may be configured to determine, based on environment data and the computed trajectory for parking the vehicle, if the vehicle can be parked automatically or if the vehicle needs to be parked manually by the driver. If the parking execution module 106 determines that the vehicle needs to be parked manually by the driver, the data processing system 105 may indicate to the control system 108 that the vehicle needs to be parked manually. Upon receiving the indication from the data processing system 105 that the vehicle needs to be parked manually, the control system 108 may hand over the control of the vehicle to the driver.

If the parking execution module 106 determines that the vehicle can be parked automatically, the data processing 105 may provide parameters specifying the computed parking trajectory and/or the computed starting position of the parking trajectory to a trajectory adjustment module 109. The trajectory adjustment module 109 is configured to adjust the parking trajectory computed by the data processing system 105. In particular, the trajectory adjustment module 109 may be configured to adjust the computed parking trajectory when the starting position of the computed parking trajectory does not coincide with the current position of the vehicle. In addition, the trajectory adjustment module 109 may be configured to adjust the computed parking trajectory in order to avoid collisions with objects in the environment of the vehicle. The adjustments of the parking trajectory computed by the data processing system 105 are based on environment data, which may be provided by the sensor system 101.

The automatic parking system 100 may further comprise a motion control module 110, which is configured to control actuators of the vehicle so that the vehicle is parked according to the adjusted parking trajectory.

The environment data preprocessing module 102, the vehicle dynamics data preprocessing module 104, the control system 108 for the activation of automatic parking, the trajectory adjustment module 109 and the motion control module 110 may be implemented separately from the data processing system 105 as depicted in Figure 1. Alternatively, one or more of group comprising the environment data preprocessing module 102, the vehicle dynamics data preprocessing module 104, the control system 108 for the activation of automatic parking, the trajectory adjustment module 109 and the motion control module 110 may be integrated into the data processing system 105.

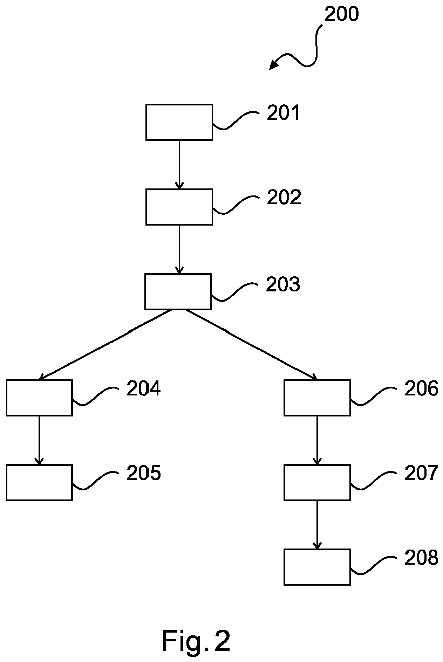

Figure 2 schematically shows a method for automatically parking a vehicle. In step 201, environment data is received, the environment data describing the environment of the vehicle. In step 202, parameters of a trajectory for automatically parking the vehicle are computed by means of the trajectory computation function comprising input parameters and weights, wherein at least part of the input parameters of the trajectory computation function are set to values derived from the environment data. In step 203, it is determined based on the environment data and the computed parking trajectory if the vehicle can be parked automatically or if the vehicle needs to be parked manually by the driver.

If the vehicle can be parked automatically, then, in step 204, the computed trajectory for parking the vehicle may be adjusted based on the environment data. The adjustment of the computed parking trajectory may be required, for example, when the computed starting position of the parking trajectory does not coincide with the current position of the vehicle. Furthermore, the computed parking trajectory may be adjusted to avoid collisions with objects in the environment of the vehicle. The adjusted parking trajectory may be provided to a motion control module. In step 205, the motion control module causes actuators of the vehicle to park the vehicle automatically based on the adjusted parking trajectory.

If the vehicle needs to be parked manually, the driver is requested in step 206 to take over the control of the vehicle. In step 207, the vehicle is parked manually, and vehicle dynamics data are recorded describing dynamics of the vehicle at one or more point in time of the manual parking maneuver. In addition, in step 207, environment data may be received describing the environment of the vehicle at one or more points in time of the manual parking maneuver. In step 208, the trajectory computation function is learned based on the environment data and the vehicle dynamics data of the manual parking maneuver.

While the invention has been illustrated and described in detail in the drawings and the foregoing description, such illustration and description are to be considered illustrative and exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the term "comprising" does not exclude other elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of protection.

## Claims

1. A data processing system (105) for an automatic parking system (100) for a vehicle,
wherein the data processing system is configured to receive environment data, the environment data describing an environment of the vehicle;
wherein the data processing system is further configured to compute parameters of a trajectory for automatically parking the vehicle by means of a trajectory computation function comprising input parameters and weights;
wherein the data processing system is configured to receive values of the weights of the trajectory computation function and/or to learn the values of the weights based on training data; and
wherein the data processing system is configured to set at least part of the input parameters of the trajectory computation function to values derived from the environment data.

2. Data processing system (105) according to claim 1,
wherein the trajectory computation function is based on a neural network; and/or
wherein the trajectory computation function is a differentiable function of the weights.

3. Data processing system (105) according to any of claims 1 or 2,
wherein the parameters of the trajectory for automatically parking the vehicle comprise polynomial coefficients.

4. Data processing system (105) according to any of the preceding claims,
wherein the data processing system is further configured to compute a starting position of the parking trajectory by means of the trajectory computation function.

5. Data processing system (105) according to any of the preceding claims,
wherein the data processing system is further configured to determine, based on the environment data and the computed trajectory for parking the vehicle, if the vehicle can be parked automatically or if the vehicle needs to be parked manually by a driver.

6. Data processing system (105) according to any of the preceding claims,
wherein the data processing system is configured to receive vehicle dynamics data, the vehicle dynamics data describing dynamics of the vehicle at a time when the vehicle is parked manually by the driver; and
wherein the training data for learning the values of the weights of the trajectory computation function is based on the environment data and the vehicle dynamics data.

7. Data processing system (105) according to any of the preceding claims,
wherein the data processing system is further configured to adjust the computed trajectory for parking the vehicle based on the environment data.

8. Automatic parking system (100) for a vehicle,
wherein the automatic parking system comprises a sensor system (101) for providing environment data; and
wherein the automatic parking system comprises a data processing system (105) according to any of the preceding claims.

9. A computer-implemented method (200) for automatically parking a vehicle, comprising the steps:
receiving environment data (201), the environment data describing an environment of the vehicle;
computing (202) parameters of a trajectory for automatically parking the vehicle by means of a trajectory computation function comprising input parameters and weights;
receiving values of the weights of the trajectory computation function and/or learning (208) the values of the weights based on training data; and
setting (202) at least part of the input parameters of the trajectory computation function to values derived from the environment data.

10. Computer-implemented method (200) according to claim 9,
wherein the trajectory computation function is based on a neural network; and/or
wherein the trajectory computation function is a differentiable function of the weights.

11. Computer-implemented method (200) according to any of claims 9 or 10, further comprising
computing a starting position of the parking trajectory by means of the trajectory computation function.

12. Computer-implemented method (200) according to any of claims 9 to 11, further comprising
determining (203), based on the environment data and the computed trajectory for parking the vehicle, if the vehicle can be parked automatically or if the vehicle needs to be parked manually by a driver.

13. Computer-implemented method (200) according to any of claims 9 to 12, further comprising the steps:
receiving (207) vehicle dynamics data, the vehicle dynamics data describing dynamics of the vehicle at a time when the vehicle is parked manually by the driver; and
wherein the training data for learning the weights of the trajectory computation function is based on the environment data and the vehicle dynamics data.

14. A computer-implemented method for learning weights of a trajectory computation function for an automatic parking system for a vehicle, wherein input parameters of the trajectory computation function are related, at least in part, to an environment of the vehicle, wherein output parameters of the trajectory computation function specify, at least in part, a trajectory for automatically parking the vehicle, and the method comprises the steps:
receiving environment data, the environment data describing the environment of the vehicle at a time when the vehicle is parked manually by a driver;
receiving vehicle dynamics data, the vehicle dynamics data describing dynamics of the vehicle at the time when the vehicle is parked manually by the driver;
learning the weights of the trajectory computation function based on the environment data and based on the vehicle dynamics data.

15. Computer-readable medium comprising instructions which, when executed by a computer, cause the computer to carry out any of the methods of claims 9 to 14.
